# EUROPEAN PATENT SPECIFICATION

(11) **EP 1 197 686 B1**
(45) Date of publication and mention of the grant of the patent: **01.09.2004**
(21) Application number: 99934718.0
(22) Date of filing: 29.06.1999
(51) Int. Cl.: F16J 15/02, F16L 17/073

(54) **SUPERELASTIC SEAL FOR LIQUID NATURAL GAS PROCESSING PLANTS**
SUPERELASTICHE DICHTUNG FÜR FLÜSSIGGASBEARBEITUNGSANLAGE
JOINT D'ETANCHEITE SUPER ELASTIQUE POUR INSTALLATIONS DE TRAITEMENT DE GAZ NATUREL LIQUIDE

(43) Date of publication of application: 17.04.2002
(73) Proprietor: Ampo, S. Coop., 20213 Idiazabal (ES)
(72) Inventor: OIARBIDE ASEGUINOLAZA, Estanislao, E-20213 Idiazabal (ES)
(74) Representative: Carpintero Lopez, Francisco
(86) International application number: PCT/ES1999/000197
(87) International publication number: WO 2001/001022

(56) References cited:
- US-A- 2 512 883
- US-A- 4 103 909
- US-A- 4 508 356
- US-A- 4 585 239
- US-A- 4 741 541

## Description

### OBJECT OF THE INVENTION

The present invention relates to an ultra-flexible gasket, of those used in liquid natural gas processing installations as sealing devices in the coupling of two generally metallic parts.

The object of the invention is to provide a gasket which maintains an ideal flexibility even in extreme conditions, such as those involved in processing liquid natural gas, and other liquefying and gasifying industrial processes, or those requiring operation with gases in extreme conditions

### BACKGROUND OF THE INVENTION

In the field of the practical application of the invention, processing installations for liquid natural gas. between the metallic parts to be joined is provided a space which houses a ring-shaped gasket with a U-section, so that both of its lateral segments are in contact with the respective metallic parts to be sealed, providing a flexible element between them which tends to separate them by pushing either segment against the corresponding metallic part, so as to attain an close seal on it.

In this respect can be cited the gaskets commercialised by the firm "American Variseal Corp.", in which the seal adopts the aforementioned U-shaped section, and houses within it an elastic element which may be a spring, also U-shaped, with a mid segment which is approximately semi-circular, and which in other cases is embodied as a coil or tubular spring

Even in the absence of fluid or at very low pressures, the flexible element maintains the gasket lips pressed against its housing, thereby closing the seal, while the fluid pressure favours this effect; that is, the pressure pushes the lips against the walls, complementing the pressure of the elastic element and therefore improving the gasket's seal. In any case, with or without pressure, the gasket must provide a sufficiently close seal, established within the narrow tolerance limits accepted.

However, when these gaskets operate under extreme conditions, such as in liquid natural gas processing installations, where said gas flows at temperatures on the order of -160°C, these gaskets lose flexibility due to their nature, as they are based on special plastics and/or elastomeres, which results in poorer functioning, that is, a poorer seal.

A gasket as defined in the preamble of claim 1 is known under the Trade name "Turcon Variseal ®" from Busak + Shamban.

### DESCRIPTION OF THE INVENTION

The gasket for liquid natural gas processing installations disclosed by the features of claim 1 solves the problems described above to a full satisfaction, so that the gasket can maintain an ideal flexibility even in such extreme conditions as those involved in processing of natural gas in liquid state, as mentioned above. In fact the gasket, according to tests carried out, operates with the required precision at temperatures of even -240°C.

For this purpose and more specifically, the gasket comprises a rectangular prismatic base meant to insert in the housing or recess defined between the two parts to be sealed; from one of its faces emerge two lips separated by an inner intermediate joint with a semicircular cambered configuration, which determines for the former a short and straight initial segment, considerably recessed with respect to the lateral surface and adjacent to the base through a concave joint. Beyond this short and straight initial segment is defined a greater second segment with an arched configuration and an inner concave shape, so that both lips together define a housing open on the front, with a section which approaches a circle and with the end extended by said semicircular cambered joint

According to a further characteristic of the invention, the lips of the gasket have an external separation clearly greater than the width of the base, so that in the resting position they extend substantially towards both sides, and must be contracted against the elastic deformation of the spring placed between them when coupling the two parts of the installation which are to be joined with the gasket interposed.

According to a further characteristic of the invention, the gasket lips are bevelled on the inside to simplify the installation o the complementary elastic element, in this case a spiral spring or the like

The radius of curvature of the inner half of each lip is clearly smaller than the radius of curvature of its external half, so that the elastic effect of the spring is mainly concentrated on the point of the lips tangent to the case of the parts to be sealed, but with a tendency to move towards the gasket base

Thus, as mentioned before, an ultra-flexible gasket is obtained which maintains an ideal imperviousness in extreme conditions, operating efficiently even at temperatures of-240°C.

### DESCRIPTION OF THE DRAWINGS

These and further characteristics of the invention will become clear in view of the accompanying drawings of a practical embodiment, where for purposes of illustration only the following is shown
Figure 1 shows a gasket according to the object of the invention, in a side view and lateral sectional view.

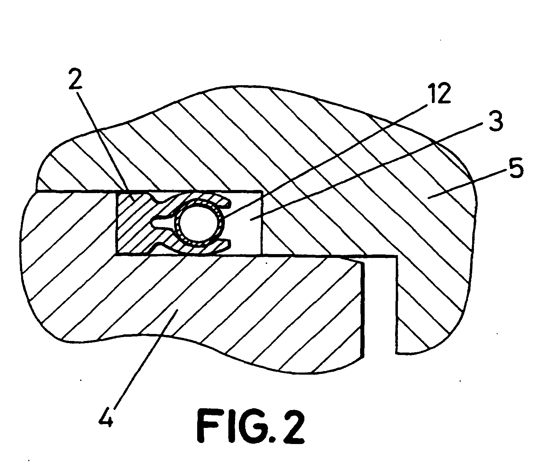

Figure 2 shows a partial detail in a sectional view of the same gasket of the previous figure, with its corresponding spring, duly coupled in the space defined by the two parts to be sealed.

### PREFERRED EMBODIMENT OF THE INVENTION

In view of the figures it may be seen that the gasket disclosed by the invention comprises an annular body (1) in which is defined a rectangular prismatic base (2), sized so that it can be coupled in the space (3) defined between parts (4) and (5) to be sealed, and emerging from one of the sides of said base (2) is a pair of lips in each of which is determined a first short segment (6) which is clearly straight and is perpendicular to the opposing face of base (2) from which it emerges, such that initial segments (6) are made independent by a centrally located intermediate joint (7), with a semicircular cambered configuration, and by two external concave joints (8), each lip complemented by a greater end segment 89) with an arched shape and a concave inside, so that end segments (9) of the two lips define a housing (10) with an approximately circular section, with a large front opening (11) which defines an access for inserting spring (12), and with a base extending as the aforementioned cambered semicircular joint (7).

Access (11) is clearly narrowed, as may be seen in any of the figures, so that end segment (9) of the lips must be elastically deformed to insert spring (12), which insertion is aided by an inner bevel (13) of said access (11).

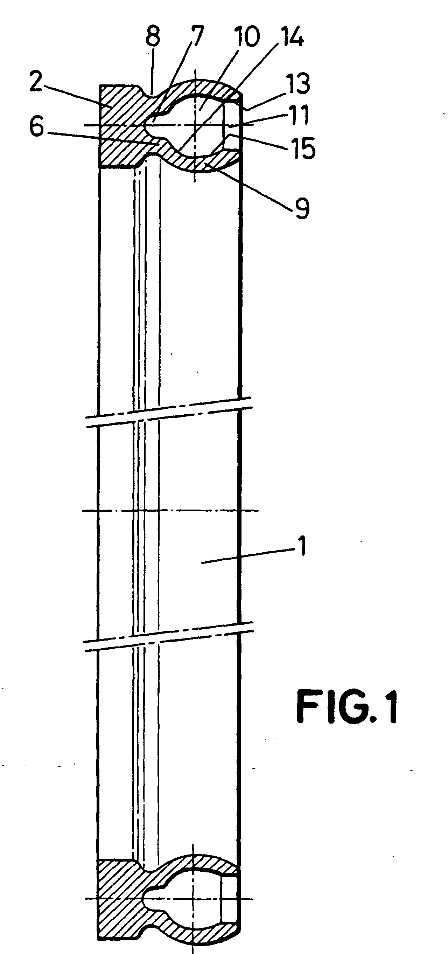

Lastly, as may be seen particularly in figure 1, end and greater segment (9) of the lips has two sectors (14) and (15)with different curvatures, such that inner sector (14) has a smaller radius of curvature than outer sector (15), with sectors (14) and (15) determined by the imaginary mid-plane of housing (10).

Arched segment (9) of the gasket lips has a separation which is clearly larger than the width of space (3) defined between parts (4) and (5), i.e. this separation is clearly larger than the width of base (2), so that after inserting spring (12) in housing (10) and after insertion of the gasket in space (3) by connection of either part (4) or (5) to the coupling of the other pan, there is a considerable approximation of lips (9) against the elastic deformation of spring (12) ensuring a perfect seal between the gasket and pans (4) and (5), that is, between these two parts.

## Claims

1. Ultra-flexible annular gasket for sealing two parts of liquid natural gas processing installations, comprising a ribbed body made of a plastic and/or elastomeric material and having a generally U-shaped cross-section, said cross-section comprising a rectangular base (2), two lips extending generally axially from one of the axial faces of the base, an elastic element, preferably in form of a spring coil (12), being located within the annular space defined between the lips and tending to deform and to urge the lips radially outwardly for pressing them against corresponding walls of the parts to be sealed,
**characterised by**
each of said lips having a short and straight initial segment and an axial end segment (9) which is curved and having a concave radially inner surface, the said straight initial segments being joined to the base (2) by an intermediate internal joining surface (7) having a semicircular concave configuration and externally by respective radially inner and outer concave surfaces (8), so that the axial end segments are in form of arcs defining a housing for receiving the elastic element, said housing having a generally circular shape in section and a strangled narrow opening at the distal ends of the axial end segments which is elastically deformed during the insertion of the elastic element.

2. Ultra-flexible gasket, as claimed in claim 1, **characterised in that**, in their rest position, the end curved segments (9) define a radial thickness or width which is greater than the radial width of base (2).

3. Ultra-flexible gasket, as claimed in above claims, **characterised in that** the end segment (9) has a smaller radius of curvature for its axially inner sector (14) than for its axially outer sector (15), which is next to the opening defining the access (11) for the elastic element.

4. Ultra-flexible gasket, as claimed in above claims, **characterised in that** the end segments (9) are provided each at their free edges with an inner bevel (13) which facilitates the insertion of the elastic element (12).

## Patentansprüche

1. Superelastische Dichtung für Flüssiggasbearbeitungsanlagen von der Art, die über einen gerillten Körper verfügen, basierend auf Plastik und/oder Elastomeren, in deren Inneren ein elastisches Element festgelegt wird, das dazu neigt, sich zu verformen und die Lippen der Dichtung gegen die Wände zu drücken, die dem Kasten zugehörig sind, der zwischen den beiden zu dichtenden Teilen ausgebildet ist, **dadurch gekennzeichnet, dass** sie über einen Grundkörper (2) verfügt, dessen Ausbildung vorzugsweise prismenförmig rechteckig ist und aus dessen einer Seite zwei Lippen herausragen, für die ein kurzer Anfangsverlauf (6) definiert ist, der geradlinig verläuft und ein Endverlauf (9), der ausgeprägt gekrümmt ist mit innerer Konkavität, wobei die geraden Anfangsabschnitte (6) beider Lippen durch eine mittlere und innere Aussparung (7) getrennt werden, die eine halbrunde aufgesetzte Ausbildung aufweist und sie nach Aussen von zwei Aussparungen (8) eingerahmt sind, die gekrümmt konkav sind und der gebogene Abschnitt (9) der besagten Lippen eine Aufnahme (10) definiert, deren Schnitt tendiert, kreisförmig zu sein mit einer äusseren Mündung (11), die deutlich abgeschnürt ist, um in ihr das elastische Element aufzunehmen, das sich vorzugsweise in einer Spiralfeder (12) oder ähnlichem ausdrückt.

2. Superelastische Dichtung für Flüssiggasbearbeitungsanlagen gemäss Anspruch 1, **dadurch gekennzeichnet, dass** der gebogene Endabschnitt (9) der Lippen im Ruhezustand einen grössen äusseren Höchstabstand aufweist als die Breite des Grundkörpers (2) und wesentlich grösser als die Breite der Aufnahme (3), die zwischen den Teilen (4) und (5) der abzudichtenden Anlage ausgebildet ist.

3. Superelastische Dichtung für Flüssiggasbearbeitungsanlagen gemäss den vorangegangenen Ansprüchen, **dadurch gekennzeichnet, dass** der gebogene Abschnitt (9) ihrer Lippen einen geringeren Krümmungsradius in seinem inneren Abschnitt (14) aufweist als in seinem äusseren Abschnitt (15), der sich nahe der Mündung (11) befindet.

4. Superelastische Dichtung für Flüssiggasbearbeitungsanlagen gemäss den vorangegangenen Ansprüchen, **dadurch gekennzeichnet, dass** der gebogene Abschnitt (9) ihrer Lippen an dem freien Rand eine innere Abschrägung (13) aufweist, die das Anbringen des elastischen Elements (12) erleichtert.

## Revendications

1. Joint d'étanchéité super-élastique pour installations de traitement de gaz naturel liquide, du type de ceux qui incorpore un corps cannelé, à base d'une matière plastique et/ou élastomère, au sein duquel est établi un élément élastique qui tend à déformer et presser les lèvres du joint contre les parois correspondantes du boîtier défini entre les deux pièces de l'installation à sceller, **caractérisé en ce qu'**il incorpore un corps de base (2), de préférence à configuration prismatique rectangle, de l'une de ses faces émergent deux lèvres pour lesquelles on définit un brin initial court (6), sensiblement rectiligne, et un brin terminal (9), très courbé, à concavité interne, les brins initiaux et rectilignes (6) des deux lèvres étant séparés par une entaille intermédiaire et interne (7), à configuration semi-circulaire surélevée, et encadrées extérieurement par les entailles (8), courbées et concaves, le secteur arqué (9) desdites lèvres définissant un logement (10), ayant tendance vers la section circulaire, avec une embouchure extérieure (11) sensiblement étranglée, pour la réception en son sein de l'élément élastique, matérialisé de préférence dans un ressort hélicoïdal (12) ou similaire.

2. Joint d'étanchéité super-élastique pour installations de traitement de gaz naturel liquide, selon la revendication 1, **caractérisé en ce qu'**en situation de repos le brin terminal et courbé (9) de ses lèvres présente un écartement extérieur maximal sensiblement supérieur à la largeur du logement (3) défini entre les pièces (4) et (5) de l'installation à étanchéifier.

3. Joint d'étanchéité super-élastique pour installations de traitement de gaz naturel liquide, selon les revendications précédentes, **caractérisé en ce que** le brin arqué (9) de ses lèvres présente un rayon de courbure inférieur sur son secteur interne (14) que sur son secteur externe (15), près de l'embouchure (11 ).

4. Joint d'étanchéité super-élastique pour installations de traitement de gaz naturel liquide, selon les revendications précédentes, **caractérisé en ce que** le brin courbé (9) de ses lèvres incorpore sur son bord libre un biseau intérieur (13) qui favorise l'accouplement en son sein de l'élément élastique (12).
